# EUROPEAN PATENT APPLICATION

(11) **EP 4 354 911 A1**
(43) Date of publication of application: **17.04.2024**
(21) Application number: 22851916.1
(22) Date of filing: 21.07.2022
(51) Int. Cl.: H04W 4/24

(54) **TRAFFIC STATISTICAL METHOD AND ELECTRONIC DEVICE**

(30) Priority: 02.08.2021 CN 202110882120
(71) Applicant: Huawei Technologies Co., Ltd., Longgang Shenzhen, Guangdong 518129 (CN)
(72) Inventor: YANG, Huaiyi, Shenzhen, Guangdong 518129 (CN)
(74) Representative: Körber, Martin Hans
(86) International application number: PCT/CN2022/107063
(87) International publication number: WO 2023/011202

(57) **Abstract**

A traffic statistics collection method and an electronic device are provided. The method is applied to a first electronic device, where a first SIM card is disposed in the first electronic device, and the first SIM card is associated with a first phone number. The method includes: displaying a first interface, where a first control is displayed in the first interface, the first control corresponds to a second SIM card associated with the first phone number, and the second SIM card is disposed in a second electronic device; and detecting a selection operation performed on the first control, and displaying a second interface, where mobile traffic information corresponding to the second SIM card is displayed in the second interface. In this application, on one electronic device, usage of mobile traffic of another electronic device associated with a same phone number can be viewed, thereby reducing user operations and improving user experience.

## Description

This application claims priority to Chinese Patent Application No. 202110882120.9, filed with the China National Intellectual Property Administration on August 2, 2021 and entitled "TRAFFIC STATISTICS COLLECTION METHOD AND ELECTRONIC DEVICE", which is incorporated herein by reference in its entirety.

### TECHNICAL FIELD

This application relates to the field of intelligent terminal technologies, and in particular, to a traffic statistics collection method and an electronic device.

### BACKGROUND

In a one-number-multi-terminal service, subscriber identity module (Subscriber Identity Module, SIM) cards of a plurality of electronic devices of a user may be associated with a same phone number, so that the plurality of electronic devices can share one phone number and plan resources, and can separately implement independent cellular mobile communication. To be specific, a plurality of electronic devices use a same phone number, each electronic device may use the phone number to make and answer a call, and each electronic device may use a mobile traffic service associated with the phone number.

However, in an existing mobile traffic statistics collection service, each electronic device can collect statistics only on mobile traffic consumption of the device itself. If a user expects to learn of usage of a traffic plan that corresponds to a phone number, the user can only view mobile traffic consumption data of electronic devices one by one. The operations are complex, and user experience is poor.

### SUMMARY

This application provides a traffic statistics collection method and an electronic device, so as to view, on one electronic device, usage of mobile traffic of another electronic device associated with a same phone number, thereby reducing user operations and improving user experience.

According to a first aspect, this application provides a traffic statistics collection method, applied to a first electronic device, where a first SIM card is disposed in the first electronic device, and the first SIM card is associated with a first phone number. The method includes: displaying a first interface, where a first control is displayed in the first interface, the first control corresponds to a second SIM card associated with the first phone number, and the second SIM card is disposed in a second electronic device; and detecting a selection operation performed on the first control, and displaying a second interface, where mobile traffic information corresponding to the second SIM card is displayed in the second interface. The SIM card may be a card type SIM card, an embedded SIM card, or the like. According to the method, usage of mobile traffic of the second electronic device associated with a same phone number can be viewed on the first electronic device, thereby reducing user operations and improving user experience.

In a possible implementation, the method further includes: displaying a second control in the second interface; and detecting a selection operation performed on the second control, and displaying a third interface, where mobile traffic information of each application in the second electronic device is displayed in the third interface, and the mobile traffic information corresponding to the application is used to record mobile traffic consumed by the application by using the second SIM card.

In a possible implementation, the method further includes: displaying, in the second interface, mobile traffic information of each application in the second electronic device, where the mobile traffic information of the application is used to record mobile traffic consumed by the application by using the second SIM card.

In a possible implementation, before the displaying a first interface, the method further includes: obtaining a card identifier of the second SIM card; and the displaying a first interface includes: displaying the first interface based on the card identifier of the second SIM card, where the first control corresponds to the card identifier of the second SIM card. The card identifier may be an IMSI or an ICCID.

In a possible implementation, before the displaying a second interface, the method further includes: obtaining the mobile traffic information corresponding to the second SIM card; and the displaying a second interface includes: displaying the second interface based on the mobile traffic information corresponding to the second SIM card.

In a possible implementation, the obtaining a card identifier of the second SIM card includes: obtaining the card identifier of the second SIM card from a first server, where the card identifier of the second SIM card is transmitted by the second electronic device to the first server; obtaining the card identifier of the second SIM card from the second electronic device; obtaining the card identifier of the second SIM card from a first application, where the first application is an application for activating a service that associates the second SIM card with the first phone number; or obtaining, from a target interface, information entered by the user, to obtain the card identifier of the second SIM card.

In a possible implementation, the obtaining the mobile traffic information corresponding to the second SIM card includes: obtaining, from a first server, the mobile traffic information corresponding to the second SIM card, where the mobile traffic information corresponding to the second SIM card is transmitted by the second electronic device to the first server; or obtaining, from the second electronic device, the mobile traffic information corresponding to the second SIM card.

In a possible implementation, the method further includes: displaying a third control in the first interface, where the third control corresponds to a third SIM card associated with the first phone number, and the third SIM card is disposed in a third electronic device; and detecting a selection operation performed on the third control, and displaying the third interface, where mobile traffic information corresponding to the third SIM card is displayed in the third interface.

In a possible implementation, the second SIM card is an eSIM card.

According to a second aspect, embodiments of this application provide an electronic device, including one or more processors, a memory, and one or more computer programs. The one or more computer programs are stored in the memory, the one or more computer programs include instructions, and when the instructions are executed by the device, the device is enabled to perform the method according to any one of the first aspect.

According to a third aspect, embodiments of this application provide a computer-readable storage medium. The computer-readable storage medium stores a computer program, and when the computer program is run on a computer, the computer is enabled to perform the method according to any one of the first aspect.

According to a fourth aspect, embodiments of this application provide a computer program. When the computer program is executed by a computer, the computer program is used to perform the method according to the first aspect.

In a possible design, the program in the fourth aspect may be all or partially stored in a storage medium that is encapsulated with a processor, or may be partially or all stored in a memory that is not encapsulated with a processor.

### BRIEF DESCRIPTION OF DRAWINGS

To describe the technical solutions in embodiments of the present invention more clearly, the following briefly introduces the accompanying drawings used for describing embodiments. It is clear that the accompanying drawings in the following descriptions show merely some embodiments of the present invention, and a person of ordinary skill in the art may still derive other drawings from these accompanying drawings without creative efforts.
FIG. 1 is a diagram of a structure of an embodiment of an electronic device according to this application;
FIG. 2 is a schematic diagram of interface implementation of a process of activating a one-number-multi-terminal service according to this application;
FIG. 3A is a schematic diagram of a direct connection between two electronic devices according to an embodiment of this application;
FIG. 3B is a schematic diagram of an indirect connection between two electronic devices according to an embodiment of this application;
FIG. 3C is a schematic diagram of an indirect connection between smartwatches according to an embodiment of this application;
FIG. 3D is a schematic diagram of an indirect connection between a mobile phone and a smartwatch according to an embodiment of this application;
FIG. 4A-1 and FIG. 4A-2 are schematic diagrams of interfaces of a traffic statistics collection method according to this application;

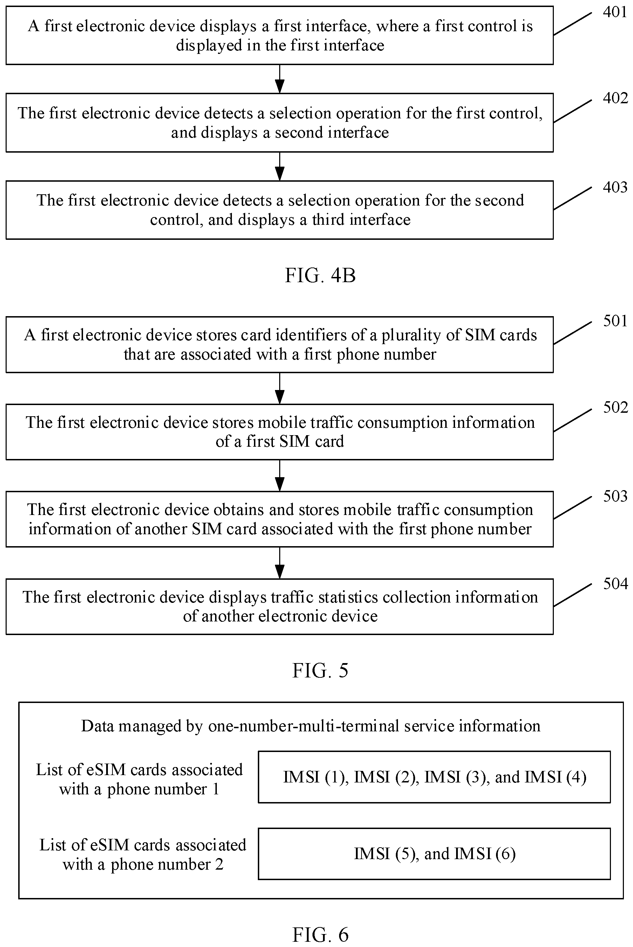

FIG. 4B is a flowchart of an embodiment of a traffic statistics collection method according to this application;
FIG. 5 is a flowchart of another embodiment of a traffic statistics collection method according to this application;
FIG. 6 is a schematic diagram of data stored in a specified server according to this application;

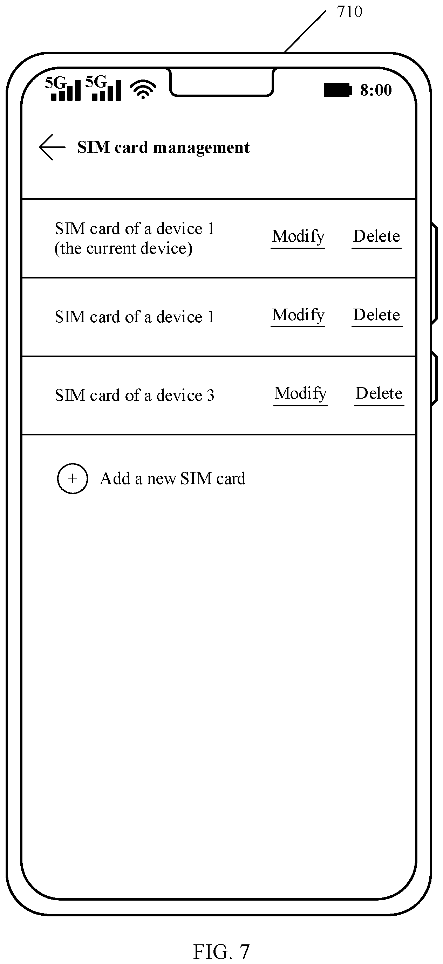

FIG. 7 is a schematic diagram of a user setting interface according to this application;

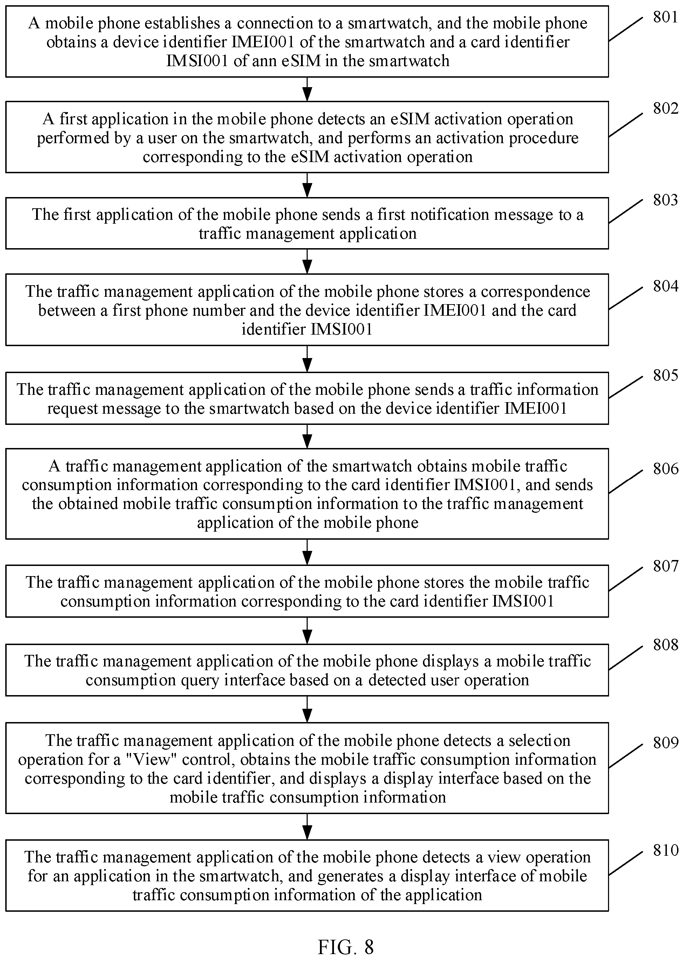

FIG. 8 is a flowchart of still another embodiment of a traffic statistics collection method according to this application;

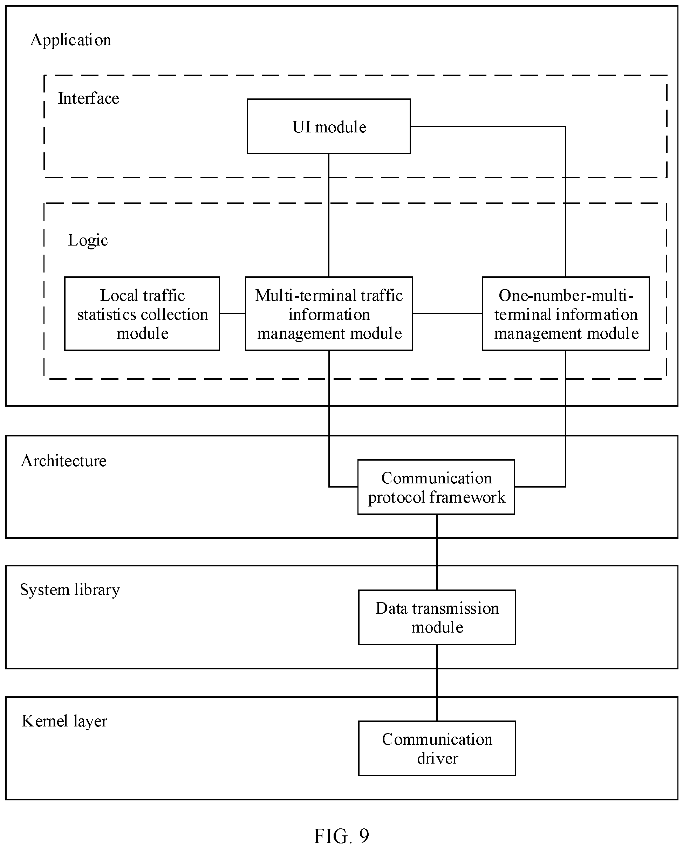

FIG. 9 is a schematic diagram of a software structure of an electronic device according to this application;

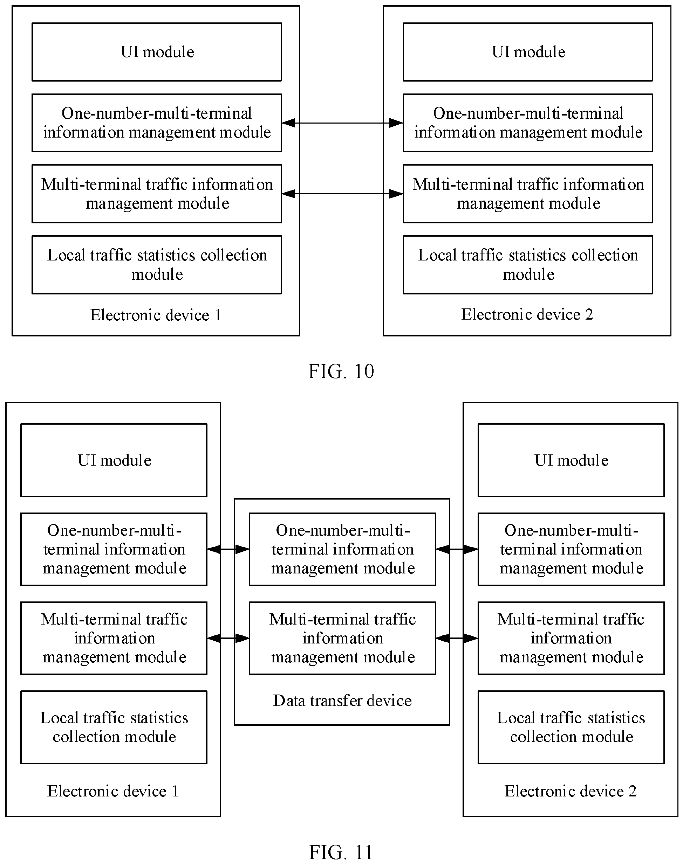

FIG. 10 is a schematic diagram of data exchange performed between modules of two electronic devices by using a direct connection according to this application; and
FIG. 11 is a schematic diagram of data exchange performed between modules of two electronic devices by using an indirect connection according to this application.

### DESCRIPTION OF EMBODIMENTS

Terms used in implementations of this application are merely used to explain specific embodiments of this application, but are not intended to limit this application.

First, terms in this application are described as an example rather than a limitation.

### Embedded SIM card (Embedded-SIM, eSIM):

The concept of "eSIM card" is to directly embed a function of a conventional SIM card into a device chip rather than adding to a device as an independent removable component. A user does not need to insert a physical SIM card. In this way, the user is allowed to select an operator plan more flexibly, or change an operator at any time without unlocking the device or purchasing a new device. In the future, establishment of a general eSIM standard will save more use costs of mobile devices for common consumers and enterprise users, and bring more convenience and security.

### International mobile subscriber identity (International Mobile Subscriber Identity, IMSI):

The IMSI is an identification code that is used to distinguish between different users in a cellular network and that is unique in all cellular networks. A mobile phone sends an IMSI, which is stored in a 64-bit field, to a network. The IMSI may be used to query user information in a home location register (Home Location Register, HLR) or a visitor location register (Visitor Location Register, VLR). To prevent an eavesdropper from identifying and tracking a specific user, in most cases, a randomly generated temporary mobile subscriber identity (TMSI, Temporary Mobile Subscriber Identity), instead of the IMSI, may be used during communication between a mobile phone and a network. The IMSI is usually stored in the SIM card.

### Mobile data traffic:

"Mobile data traffic" is data traffic generated by accessing a network or utilizing a related data value-added service by using mobile communication technologies such as general packet radio service (General packet radio service, GPRS), enhanced data rate GSM evolution (Enhanced Data Rate for GSM Evolution, EDGE), time division-synchronous code division multiple access (Time Division-Synchronous Code Division Multiple Access, TD-SCDMA), high speed downlink packet access (High Speed Downlink Packet Access, HSDPA), wideband code division multiple access (Wideband Code Division Multiple Access, WCDMA), and long term evolution (Long Term Evolution, LTE). Generally, the mobile data traffic does not include traffic generated by accessing the network in another manner such as by using a wireless local area network (Wireless Local Area Network, WLAN) or circuit switch data (Circuit Switch Data, CSD), does not include data traffic deducted by a data value-added service of content-based charging (such as multimedia message, personal information manager, full track music download, and dynamic content delivery), and does not include data traffic generated by a corporate customer and industry application.

### One-number-multi-terminal service:

In the one-number-multi-terminal service, a plurality of electronic devices share one phone number and plan resources, and can implement independent cellular mobile communication. Generally, the plurality of electronic devices use a same number, each electronic device may use the phone number to make and answer a call, and each electronic device may use a traffic service associated with the phone number. For example, if a user uses a same phone number on a mobile phone, a smartwatch, and a vehicle-mounted terminal to access a network, the mobile phone, the smartwatch, and the vehicle-mounted terminal share plan resources and an add-on traffic table of the phone number, and out-of-plan fee standards are the same. If a call is made to the phone number of the user, the mobile phone, the smartwatch, and the vehicle-mounted terminal associated with the phone number receive the call at the same time, and the user may answer the call on any electronic device. The user may also use any device of the mobile phone, the smartwatch, or the vehicle-mounted terminal to make a call. Regardless of whether the user is a calling person or a called person, a phone number presented to others is the phone number. In this way, that the user manages a plurality of phone numbers on the plurality of electronic devices is avoided, which brings great convenience to the user.

However, in an existing mobile traffic statistics collection service, each electronic device can collect statistics only on mobile data traffic consumption of the electronic device itself. If a user expects to learn usage of a traffic plan, the user can only view mobile traffic consumption data of electronic devices one by one. The operations are complex, and user experience is poor.

Therefore, this application provides a traffic statistics collection method and an electronic device, so as to view, on one electronic device, usage of mobile traffic of another electronic device, thereby reducing user operations and improving user experience.

The method provided in embodiments of this application may be applied to an electronic device. A SIM card is disposed in the electronic device, and may be, for example, a mobile phone, a vehicle-mounted device, or a wearable device such as smart glasses or a smartwatch. The SIM card may be a card type SIM card (that is, the foregoing conventional SIM card), an eSIM card, or the like.

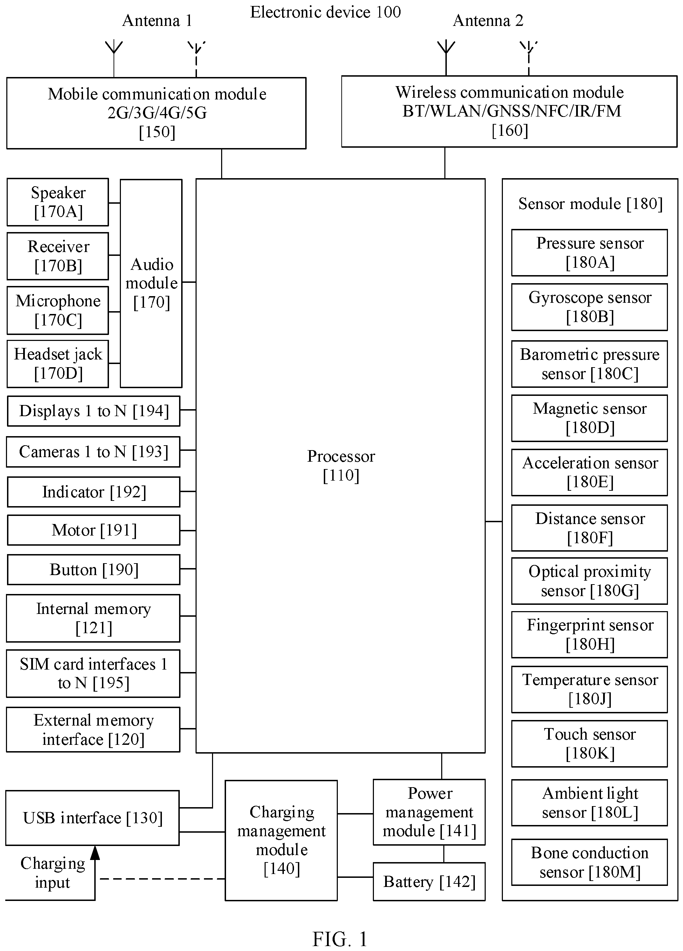

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been recently used or cyclically used by the processor 110. If the processor 110 needs to use the instructions or the data again, the instructions or the data may be directly invoked from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit the audio signal to the wireless communication module 160 through the UART interface, to implement a function of playing music by using a Bluetooth headset.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB Type C interface, or the like. The USB interface 130 may be configured to connect to the charger to charge the electronic device 100, or may be configured to transmit data between the electronic device 100 and the peripheral device. The USB interface may alternatively be configured to connect to a headset to play audio through the headset. The interface may be further configured to connect to another electronic device, for example, an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger, or may be a wired charger. In some embodiments of wired charging, the charging management module 140 may receive a charging input from the wired charger through the USB interface 130. In some embodiments of wireless charging, the charging management module 140 may receive a wireless charging input by using a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a solution, applied to the electronic device 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high-frequency signal. The demodulator is configured to demodulate the received electromagnetic wave signal into a low frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives the electromagnetic wave by using the antenna 2, performs frequency modulation and filtering processing on the electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation systems, SBAS).

The electronic device 100 implements the display function by using the GPU, the display 194, the application processor, and the like. The GPU is a microprocessor for image processing, and is connected to the display 194 and the application processor. The GPU is configured to: perform mathematical and geometric computation and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one display 194 or N displays 194, where N is a positive integer greater than 1.

The electronic device 100 may implement the photographing function by using the ISP, the camera 193, the video codec, the GPU, the display 194, the application processor, and the like.

The ISP is configured to process data fed back by the camera 193. For example, during photographing, a shutter is pressed, and light is transmitted to a camera photosensitive element of the camera through a lens. An optical signal is converted into an electrical signal, and the camera photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into the electrical signal, and then transmits the electrical signal to the ISP to convert the electrical signal into a digital image signal. The ISP outputs the digital image signal to the DSP for processing. The DSP converts the digital image signal into an image signal in a standard format such as an RGB format or a YUV format. In some embodiments, the electronic device 100 may include one camera 193 or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to: compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of biological neural network, for example, by referring to a mode of transmission between human brain neurons, and may further continuously perform self-learning. Applications such as intelligent cognition of the electronic device 100 may be implemented by using the NPU, for example, image recognition, facial recognition, speech recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like created in a process of using the electronic device 100. In addition, the internal memory 121 may include a high-speed random access memory, and may further include a nonvolatile memory, for example, at least one magnetic disk storage device, a flash storage device, and a universal flash storage (universal flash storage, UFS). The processor 110 runs the instructions stored in the internal memory 121 and/or the instructions stored in the memory disposed in the processor, to perform various functional applications of the electronic device 100 and data processing.

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode the audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a hands-free call by using the speaker 170A.

The receiver 170B, also referred to as an "earpiece", is configured to convert an audio electrical signal into a sound signal. When a call is answered or voice information is received by using the electronic device 100, the receiver 170B may be put close to a human ear to listen to a voice.

The microphone 170C, also referred to as a "mike" or a "microphone", is configured to convert a sound signal into an electrical signal. When making a call or sending a voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect the sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as an impedance pressure sensor, an inductive pressure sensor, and a capacitive pressure sensor.

The capacitive pressure sensor may include at least two parallel plates made of conductive materials. When a force is applied to the pressure sensor 180A, capacitance between electrodes changes. The electronic device 100 determines pressure intensity based on the capacitance change. When a touch operation is performed on the display 194, the electronic device 100 detects intensity of the touch operation based on the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a "Messaging" application icon, an instruction of viewing a short message service message is executed. When a touch operation whose touch operation intensity is greater than or equal to the first pressure threshold is performed on the "Messaging" application icon, an instruction of creating a new short message service message is executed.

The gyroscope sensor 180B may be configured to determine a motion posture of the electronic device 100. In some embodiments, angular velocities of the electronic device 100 around three axes (namely, axes x, y, and z) may be determined by using the gyroscope sensor 180B. The gyroscope sensor 180B may be configured to implement image stabilization during photographing. For example, when a shutter is pressed, the gyroscope sensor 180B detects an angle at which the electronic device 100 jitters, calculates, based on the angle, a distance for which a lens module needs to compensate, and allows a lens to cancel the jitter of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip cover leather case by using the magnetic sensor 180D. In some embodiments, when the electronic device 100 is a flip phone, the electronic device 100 may detect opening and closing of a flip cover based on the magnetic sensor 180D. Further, the electronic device 100 sets, based on a detected opening or closing state of the leather case or a detected opening or closing state of the flip cover, a feature such as automatic unlocking of the flip cover.

The acceleration sensor 180E may detect accelerations in various directions (usually on three axes) of the electronic device 100. A magnitude and a direction of gravity may be detected when the electronic device 100 is still. The acceleration sensor 180E may be further configured to identify a posture of the electronic device, and is used for applications such as landscape/portrait mode switching and a pedometer.

The distance sensor 180F is configured to measure a distance. The electronic device 100 may measure a distance through infrared or laser. In some embodiments, in a photographing scenario, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light outward by using the light-emitting diode. The electronic device 100 detects infrared reflected light from a nearby object by using the photodiode. When sufficient reflected light is detected, it may be determined that there is an object near the electronic device 100. When inadequate reflected light is detected, the electronic device 100 may determine that there is no object near the electronic device 100. The electronic device 100 may detect, by using the optical proximity sensor 180G, that a user holds the electronic device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142, to prevent the electronic device 100 from being shut down abnormally due to a low temperature. In some other embodiments, when the temperature is less than still another threshold, the electronic device 100 boosts an output voltage of the battery 142, to avoid abnormal shutdown due to a low temperature.

The touch sensor 180K is also referred to as a "touch control device". The touch sensor 180K may be disposed on the display 194, and the touch sensor 180K and the display 194 constitute a touchscreen, which is also referred to as a "touch screen". The touch sensor 180K is configured to detect a touch operation on or near the touch sensor 180K. The touch sensor may transfer the detected touch operation to the application processor, to determine a type of a touch event. A visual output related to the touch operation may be provided on the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal. In some embodiments, the bone conduction sensor 180M may alternatively be disposed in a headset, to obtain a bone conduction headset. The audio module 170 may parse out a voice signal based on the vibration signal, obtained by the bone conduction sensor 180M, of the vibration bone of the vocal-cord part, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt or a touch vibration feedback. For example, touch operations performed on different applications (for example photographing and audio play) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one SIM card interface or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 may be compatible with different types of SIM cards. The SIM card interface 195 may also be compatible with an external storage card. The electronic device 100 interacts with a network through the SIM card, to implement functions such as calling and data communication. In some embodiments, the electronic device 100 uses an eSIM, namely, an embedded SIM card. The eSIM card may be embedded in the electronic device 100, and cannot be separated from the electronic device 100.

A software system of the electronic device 100 may use a layered architecture, an event-driven architecture, a microkernel architecture, a microservice architecture, or a cloud architecture, which may be specifically an Android system, a HarmonyOS system, or the like.

For ease of understanding, in the following embodiments of this application, an electronic device having the structure shown in FIG. 1 is used as an example, and methods provided in embodiments of this application are specifically described with reference to the accompanying drawings.

First, a process in which a user activates a one-number-multi-terminal service in a traffic statistics collection method in this application is described by using an example.

That the user activates the one-number-multi-terminal service for a mobile phone and a smartwatch is used as an example. The user may establish a connection between the mobile phone and the smartwatch by using NFC, Bluetooth, Wi-Fi, or the like.

It is assumed that a phone number associated with a SIM card of the mobile phone is 12345678900. It should be noted that there may be two or more SIM cards in the mobile phone. The SIM card of the mobile phone in this application may be any SIM card in the mobile phone.

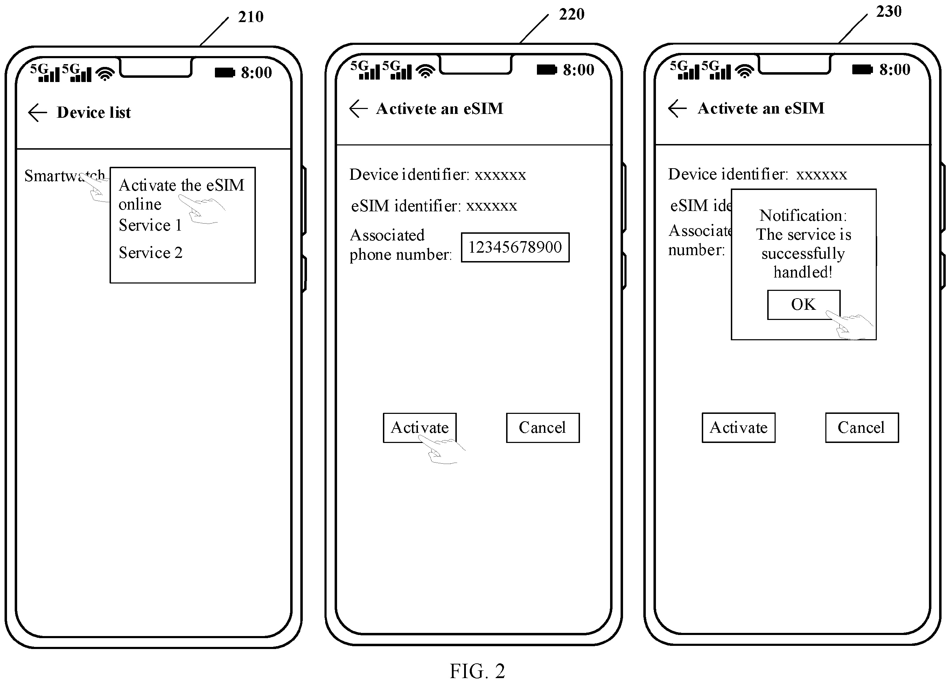

The user downloads and installs, in the mobile phone, an application 1 used to activate the one-number-multi-terminal service, and opens an interface 210, for example, shown in FIG. 2 in the application 1. A list of devices connected to the mobile phone is displayed in the interface 210, in which "Smartwatch" is included. The user selects an "Activate the eSIM online" control corresponding to the smartwatch. Correspondingly, the interface 220, for example, shown in FIG. 2 is displayed. In the interface 220, a device identifier of the smartwatch and a card identifier of the eSIM card of the smartwatch are displayed, and the to-be-associated phone number "12345678900" is further displayed. Optionally, the device identifier may be an IMEI. The card identifier of the eSIM card may be an integrated circuit card identifier (Integrate circuit card identity, ICCID), an IMSI, an embedded universal integrated circuit card identity (embedded UICC identity, EUICC ID), or the like.

It should be noted that the device identifier and the card identifier may be obtained from the smartwatch by the application 1 by using the mobile phone, may be manually filled by the user, or the like. This is not limited herein.

It should be noted that the to-be-associated phone number may be manually filled by the user. Alternatively, the application 1 may obtain, from an application 2 that is in the mobile phone and that is used to manage the SIM card, the phone number associated with the SIM card of the mobile phone, so that the phone number is automatically displayed in the interface 220. Alternatively, if a plurality of SIM cards are included in the mobile phone, a primary SIM card may be set in the plurality of SIM cards, and the application 1 may obtain, from the application 2, a phone number associated with the primary SIM card, so that the phone number is automatically displayed in the interface 220.

The user selects an "OK" control in the interface 220. Correspondingly, the application 1 of the mobile phone receives the selection operation of the user performed on the "OK" control, and sends a one-number-multi-terminal service request message to an operator server. The message may carry the phone number 12345678900 and the card identifier (for example, the IMSI, the ICCID, or the EUICC ID) of the eSIM of the smartwatch. Optionally, the message may further carry the device identifier (for example, the IMEI) of the smartwatch.

The operator server side receives the foregoing one-number-multi-terminal service request message, completes a process of activating the one-number-multi-terminal service, and feeds back an acknowledgement message to the application 1 of the mobile phone.

The application 1 of the mobile phone displays an interface 230, for example, shown in FIG. 2, to the user, and prompts the user that the one-number-multi-terminal service is successfully handled.

The application 1 of the mobile phone may feed back, to the smartwatch, a notification message that the one-number-multi-terminal service is successfully handled.

It should be noted that the foregoing merely shows procedures and interfaces that are related to traffic statistics collection in embodiments of this application and that are in a process in which the user handles the one-number-multi-terminal service, and is not intended to limit a procedure of handling the one-number-multi-terminal service. For example, in the process of handling the one-number-multi-terminal service, the foregoing interfaces may be different. The procedure may further include other possible procedures such as reading a service description, entering a name and ID card numbers by the user, and downloading an eSim profile to the eSIM card by the smartwatch. Details are not described herein again.

In this embodiment of this application, for ease of description, if an eSIM card of an electronic device is associated with a phone number, it also means that the electronic device is associated with the phone number. For example, if an eSIM card of a mobile phone is associated with the phone number 12345678900, it is also means that the mobile phone is associated with the phone number 12345678900.

The following describes a possible implementation of data transmission performed between two electronic devices that are associated with a same phone number in the traffic statistics collection method in this application.

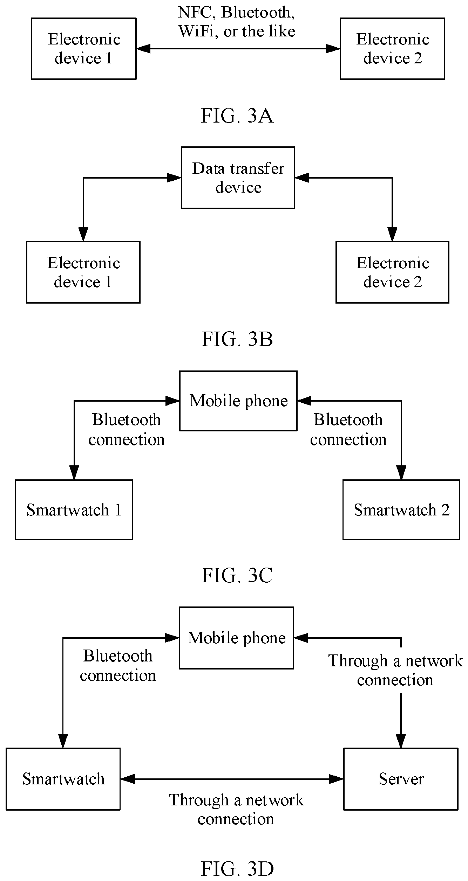

Refer to FIG. 3A. A connection between an electronic device 1 and an electronic device 2 that are associated with a same phone number may be directly established by using NFC, Bluetooth, Wi-Fi, or the like. Data exchange is performed through the connection. For ease of description, in this embodiment of this application, the connection established between the foregoing two electronic devices is referred to as a direct connection.

Refer to FIG. 3B. The electronic device 1 and the electronic device 2 may be separately connected to a data transfer device. Data exchange may be implemented between the electronic device 1 and the electronic device 2 by using the data transfer device. The connection manner may also mean that the two electronic devices are indirectly connected by using the data transfer device. For ease of description, the connection is also referred to as an indirect connection in this embodiment of this application.

Optionally, the foregoing data transfer device is a server, for example, a cloud server. The electronic device may use an account to log in to the server through a network connection, to establish a connection to the server. A user logs in to the server on two electronic devices by using a same account. In this case, the server may forward data of one electronic device to another electronic device based on the same account.

Optionally, the foregoing data transfer device is an electronic device associated with the same phone number as the two electronic devices. For example, refer to FIG. 3C. A mobile phone, a smartwatch 1, and a smartwatch 2 are associated with a same phone number. A Bluetooth connection is established between the smartwatch 1 and the mobile phone, and a Bluetooth connection is established between the smartwatch 2 and the mobile phone. In this case, data exchange may be performed between the smartwatch 1 and the smartwatch 2 by using the mobile phone.

It should be noted that, when data exchange is performed between two electronic devices, the foregoing direct connection and the indirect connection may coexist, or may be switched between each other. For example, refer to FIG. 3D. The mobile phone and a smartwatch may be directly connected through Bluetooth. In addition, the mobile phone uses an account 1 to log in to the server through a network connection, and the smartwatch uses the account 1 to log in to the server through the network connection. In this case, the mobile phone and the smartwatch are indirectly connected by using the server. There are both the direct connection and the indirect connection between the mobile phone and the smartwatch. The mobile phone and the smartwatch may transmit data separately by using the direct connection and the indirect connection. Alternatively, when data exchange is performed between the mobile phone and the smartwatch, a connection between the mobile phone and the smartwatch may be switched from the direct connection to the indirect connection, or may be switched from the indirect connection to the direct connection in a data exchange process.

The following describes statistics information obtained by an electronic device by collecting statistics on usage of mobile traffic data of the electronic device in the traffic statistics collection method in this application.

As shown in Table 1, the electronic device may collect statistics on information about data transmitted by each application in each time period through different network interfaces. Table 1 includes fields such as "time period", "network port", "application identifier", and "data volume". The network port field is used to record a data transmission method used by an application. The data transmission method may include but is not limited to a mobile traffic manner, a WLAN manner, a Bluetooth manner, and the like. It is assumed that, in Table 1, port #1 represents a mobile traffic manner of using an eSIM card, port #2 represents the WLAN manner, and port #3 represents the Bluetooth manner. The application identifier field is used to record an identifier of the application. The data volume is used to record a volume of data that is transmitted.

For example, a first record indicates that an application A sends 2.3M data in a mobile traffic manner from 01:00 to 02:00.

**Table 1**

| Time period | Network port | Application identifier | Data volume |
|---|---|---|---|
| 2021.07.01 01:01 to 2021.07.01 02:00 | Port #1 | Application A | 2.3M |
| 2021.07.01 01:01 to 2021.07.01 02:00 | Port #1 | Application B | 4.6M |
| 2021.07.01 01:01 to 2021.07.01 02:00 | Port #3 | Application C | 6.3M |
| 2021.07.01 01:01 to 2021.07.01 02:00 | Port #2 | Application C | 5.8M |
| 2021.07.01 02:01 to 2021.07.0103:00 | Port #1 | Application D | 20.1M |
| 2021.07.0102:01 to 2021.07.0103:00 | Port #1 | Application E | 27.3M |
| 2021.07.0102:01 to 2021.07.0103:00 | Port #3 | Application B | 29.3M |
| 2021.07.01 03:01 to 2021.07.0104:00 | Port #2 | Application C | 22.3M |
| 2021.07.01 03:01 to 2021.07.0104:00 | Port #2 | Application D | 21.3M |
| 2021.07.01 04:01 to 2021.07.01 05:00 | Port #3 | Application A | 62.3M |
| 2021.07.01 04:01 to 2021.07.01 05:00 | Port #1 | Application B | 82.3M |
| ... | ... | ... | ... |

The electronic device may retrieve a record corresponding to the "Port #1" from Table 1, to obtain mobile traffic consumption information of each application. Further, the electronic device may calculate, based on the consumption information, information such as a total amount of mobile traffic consumed by the electronic device within a specified time period (for example, one billing period), and a total amount of mobile traffic consumed by each application within the specified time period (for example, one billing period).

It should be noted that a plurality of SIM cards may be disposed in the electronic device. In this case, different SIM cards with which the traffic is used may be distinguished by using different values of the network port. Therefore, the electronic device may also obtain, by using different values of the network port, mobile traffic consumed by each application by using a SIM card.

FIG. 4A-1 and FIG. 4A-2 are schematic diagrams of interfaces of a traffic statistics collection method according to this application. In FIG. 4A-1 and FIG. 4A-2, an example in which a phone number 1 is associated with three SIM cards in total, which are a SIM card of a device 1 to a SIM card of a device 3, in a one-number-multi-terminal service is used for description. Interfaces shown in FIG. 4A-1 and FIG. 4A-2 are an example of interfaces displayed on the device 1.

The traffic statistics collection method in embodiments of this application may be performed by an application in an electronic device. For ease of description, an application that is in the electronic device and that is used for mobile traffic statistics collection and display is referred to as a traffic management application. The traffic management application may be, for example, a "Setting" application in the electronic device.

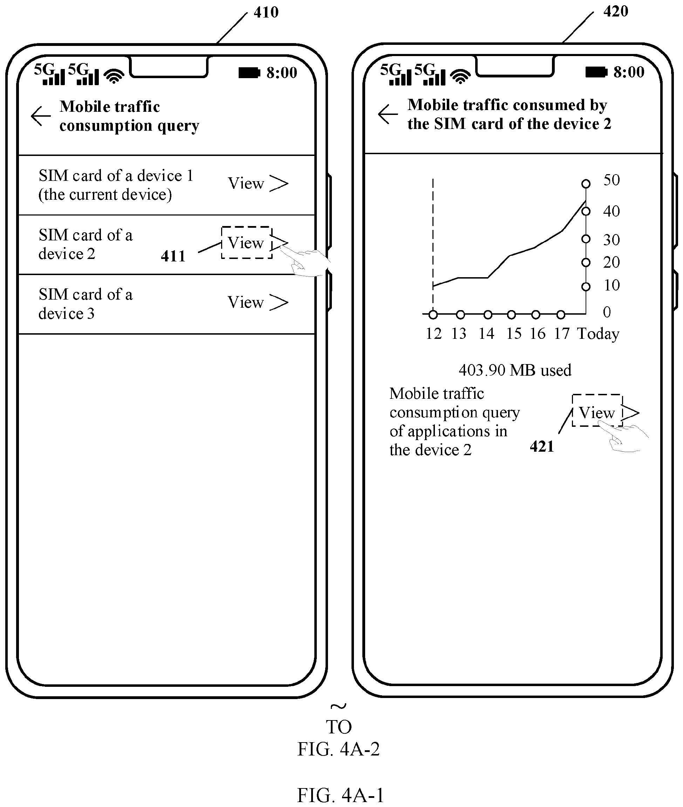

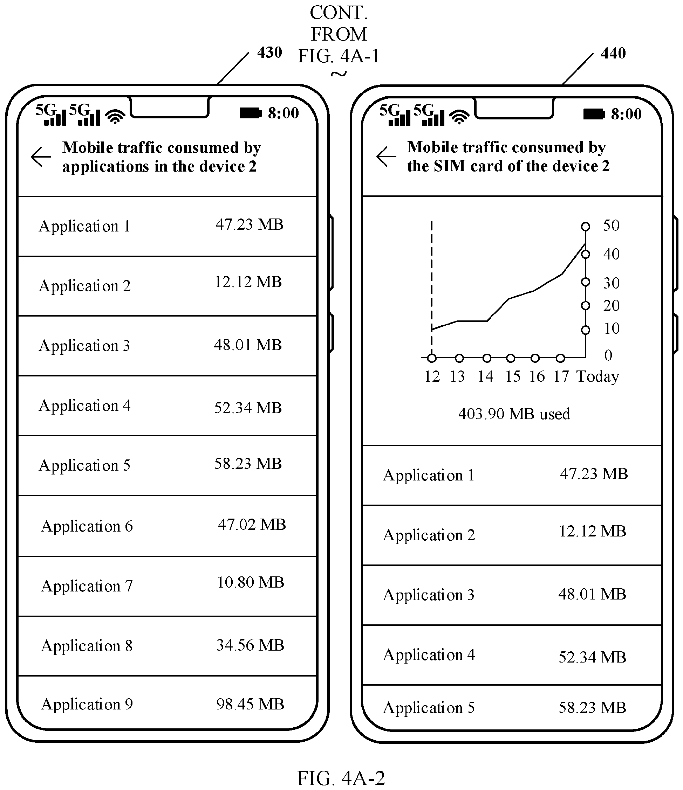

Refer to an interface 410 in FIG. 4A-1. The interface 410 is an example diagram of a mobile traffic consumption query interface provided in the traffic management application. In the interface 410, a list of SIM cards associated with the one-number-multi-terminal service is shown. For example, in FIG. 4A-1, three SIM cards are associated, which are respectively the SIM card of the device 1 to the SIM card of the device 3.

If a user selects a "View" control corresponding to a SIM card in the SIM card list, for example, a "View" control 411 of the SIM card of the device 2, the traffic management application may display a display interface of mobile traffic consumption information of the SIM card of the device 2, for example, an interface 420 shown in FIG. 4A-1. The display interface of the mobile traffic consumption information of the device 2 may be used to display mobile traffic consumption information such as a total amount of mobile traffic consumed by the SIM card of the device 2 and a total amount of mobile traffic consumed by the device 2 every day. For example, in the interface 420, a statistical graph of mobile traffic consumed by the device 2 each day in last seven days, a total amount, which is 403.90 MB, of mobile traffic that has been consumed by the device 2, and the like are displayed.

Optionally, in the interface 420 in FIG. 4A-1, a control used to trigger querying for mobile traffic consumed by applications in the device 2, for example, a "View" control 421 in the interface 420, may be further displayed. The user selects the "View" control 421. The traffic management application may display a display interface of mobile traffic consumption information of the applications in the device 2, for example, an interface 430 in FIG. 4A-2, where a total amount of mobile traffic consumed, by using the SIM, by each application installed in the device 2 is shown.

Optionally, in the interface 420, the control for querying for mobile traffic consumed by the applications in the device 2 may not be displayed. Instead, the mobile traffic consumed, by using the SIM, by each application displayed in the interface 430 is directly displayed in the interface 420, for example, shown in an interface 440.

It should be noted that, the mobile traffic consumption information displayed in the interfaces in FIG. 4A-1 and FIG. 4A-2 may be mobile traffic consumption information in one billing period of an operator, so that the display of the consumption information is more targeted, and it is more helpful for the user to learn of a situation in which the mobile traffic is consumed in one billing period.

It should be noted that the mobile traffic consumption information displayed in the interfaces in FIG. 4A-1 and FIG. 4A-2 may further include mobile traffic consumption information on which statistics are collected not based on the billing period. This is not limited in this application.

FIG. 4B is a flowchart of an embodiment of a traffic statistics collection method according to this application. The method may be applicable to a first electronic device. A first SIM card is disposed in the first electronic device, and the first SIM card is associated with a first phone number. As shown in FIG. 4B, the method may include the following steps.

Step 401: The first electronic device displays a first interface, where a first control is displayed in the first interface, the first control corresponds to a second SIM card associated with the first phone number, and the second SIM card is disposed in a second electronic device.

The first interface may be the foregoing mobile traffic consumption query interface, for example, an interface 410. The first control may be "View" controls corresponding to a device 2 and a device 3 in the interface 410.

Step 402: The first electronic device detects a selection operation performed on the first control, and displays a second interface, where mobile traffic information corresponding to the second SIM card is displayed in the second interface.

The second interface may be the foregoing display interface of mobile traffic consumption information of a SIM card, for example, an interface 420.

Optionally, a second control may be further displayed in the second interface. In this case, the method may further include Step 403.

Step 403: The first electronic device detects a selection operation performed on the second control, and displays a third interface, where information about mobile traffic consumed by each application in the second electronic device by using the second SIM card is displayed in the third interface.

The second control may be the foregoing "View" control 421. The third interface may be a display interface of mobile traffic consumption information of an application, for example, an interface 430.

Optionally, the second control may not be disposed in the second interface. Instead, the information about the mobile traffic consumed by each application in the second electronic device by using the second SIM card is directly displayed.

According to the traffic statistics collection method shown in FIG. 4B, that mobile traffic consumed by the second electronic device by using the second SIM card is viewed on the first electronic device is implemented. Further, the mobile traffic consumed each application in the second electronic device by using the second SIM card may be viewed, thereby reducing user operations and improving user experience.

FIG. 5 is a flowchart of an embodiment of a traffic statistics collection method according to this application. In the method, it is assumed that a first SIM card is disposed in a first electronic device, and the first SIM card is associated with a first phone number. The first electronic device may include only the first SIM card, or may include a plurality of SIM cards. The first SIM card is any one of the plurality of SIM cards. In the method, an example in which a user may query, in a first electronic device, mobile traffic consumption information of a plurality of SIM cards associated with a same phone number is used. As shown in FIG. 5, the method may include the following steps.

Step 501: The first electronic device stores card identifiers of the plurality of SIM cards that are associated with the first phone number.

The card identifier of the SIM card may be an IMSI, an ICCID, or the like of the SIM card.

Optionally, the first electronic device may further store a device identifier of an electronic device in which the plurality of SIM cards are located, and the device identifier may be an IMEI of the electronic device.

For example, it is assumed that the first phone number is associated with two SIM cards, which are respectively the first SIM card and a second SIM card. The second SIM card is disposed in the second electronic device, a card identifier of the first SIM card is IMSI001, and a card identifier of the second SIM card is IMSI002. In this case, the first electronic device may store the following information:
a list of SIM cards associated with the first phone number: IMSI001 and IMSI002.

If a third SIM card is disposed in the first electronic device in addition to the first SIM card, the third SIM card is associated with a second phone number, the second phone number is associated with the third SIM card (it is assumed that a card identifier is IMSI003) and a fourth SIM card (it is assumed that a card identifier is IMSI004), and the fourth SIM card is disposed in a third electronic device. In this case, the first electronic device may store the following information:
a list of SIM cards associated with the first phone number: IMSI001 and IMSI002; and
a list of SIM cards associated with the second phone number: IMSI003 and IMSI004.

In a possible implementation, the first electronic device may obtain, from a specified server, the card identifiers of the SIM cards associated with the first phone number.

Each electronic device associated with the same phone number may access the specified server, and send the card identifier of the SIM card in the device itself and the associated phone number to the specified server. Correspondingly, the specified server may store, based on the phone number, card identifiers of a plurality of SIM cards associated with the phone number. Therefore, each electronic device associated with the same phone number may obtain a card identifier of another SIM card from the specified server.

For example, a SIM card of a device 1 to a SIM card of a device 4 are separately associated with a mobile phone number A. The device 1 to the device 4 may separately access a specified server, and respectively send a card identifier of the SIM card of the device and the mobile phone number A associated with the SIM card to the specified server. A SIM card of a device 5 and a SIM card of a device 6 are separately associated with a mobile phone number B. The device 5 and the device 6 may separately access the specified server, and respectively send a card identifier of the SIM card of the device and the associated mobile phone number B to the specified server. Correspondingly, the specified server stores data shown in FIG. 6:
a list of SIM cards associated with the mobile phone number A: IMSI (1), IMSI (2), IMSI (3), and IMSI (4); and
a list of SIM cards associated with the mobile phone number B: IMSI (5) and IMSI (6).

In this case, the device 1 to the device 4 may query the specified server for the SIM card list corresponding to the mobile phone number A, and the device 5 and the device 6 may query the specified server for the SIM card list corresponding to a mobile phone B.

To ensure user privacy, the electronic device may access the specified server by using an account. In this case, the SIM card lists in the specified server may correspond to the account. A device can access, only by logging in to a corresponding account, the specified server and obtain the SIM card lists corresponding to the account. An example is as follows.

The user logs in to an account 1 separately in the device 1 to the device 4. The device 1 to the device 4 may access the specified server by using the account, and send the card identifier of the SIM card in the device and the mobile phone number A associated with the SIM card to the specified server. In this case, the specified server stores the following correspondence among the information:
a mobile phone A, [IMSI (1), IMSI (2), IMSI (3), IMSI (4)], and an account 1.

In this case, the device can access, only when the user logs in to the account 1 in a device, the specified server by using the account 1, and query, in the specified server, an eSIM card list [IMSI (1), IMSI (2), IMSI (3), IMSI (4)] corresponding to the account 1.

In another possible implementation, the first electronic device may obtain, from another electronic device associated with the first phone number, a card identifier of a SIM card in the another electronic device.

The first electronic device and the second electronic device may be directly connected in a manner such as NFC, Bluetooth, or Wi-Fi. The first electronic device and the second electronic device determine, through the direct connection, that both devices are associated with the first phone number, and respectively send a card identifier of a SIM card that is in the device and that is associated with the first phone number to the peer electronic device.

For example, the mobile phone and the smartwatch may establish a connection through Bluetooth, and the mobile phone and the smartwatch may perform data exchange through the Bluetooth connection. The mobile phone and the smartwatch separately determine that the peer device is associated with the first phone number. In this case, the mobile phone may send a card identifier of a first SIM card that is in the mobile phone and that is associated with the first phone number to the smartwatch, and the smartwatch sends a card identifier of a SIM card that is in the smartwatch and that is associated with the first phone number to the mobile phone.

In a third possible implementation, if an application used to activate a one-number-multi-terminal service, for example, the application 1 in the foregoing example, is installed in the first electronic device, the first electronic device may obtain, from the application 1, the card identifiers of the SIM cards associated with the first phone number. For example, in the foregoing example, the application 1 may be installed in the mobile phone. In this case, a traffic management application in the mobile phone may obtain, from the application 1, the card identifier of another SIM card associated with the first phone number. The another SIM card is a SIM card, other than the first SIM card, associated with the first phone number.

In a fourth possible implementation, the first electronic device may provide, for example, a user setting interface 710 shown in FIG. 7, for the user. The user may manually configure and modify, in the setting interface 710, a card identifier of another SIM card associated with a same phone number.

It should be noted that an execution occasion for the first electronic device to obtain the card identifier of the another SIM card may include but is not limited to: when the first electronic device activates a one-card-multi-terminal service of the SIM card, after the SIM card is inserted into the first electronic device, or when the SIM in the first electronic device is replaced, the first electronic device obtains the card identifier of the another SIM card.

It should be noted that, if an association relationship between a SIM card of an electronic device and a phone number is canceled or changed, the association relationship may also be synchronized to another electronic device in the foregoing manner in this step.

Step 502: The first electronic device stores mobile traffic consumption information of the first SIM card.

The first electronic device may store, for example, traffic statistics collection information shown in Table 1, where the traffic statistics collection information includes the mobile traffic consumption information of the first SIM card.

The mobile traffic consumption information may include but is not limited to: mobile traffic consumed by the first electronic device by using the first SIM card, mobile traffic consumed by each application in the first electronic device by using the first SIM card, and the like.

Optionally, the mobile traffic consumption information may be information about mobile traffic consumed in a current billing period.

Step 503: The first electronic device obtains and stores mobile traffic consumption information of the another SIM card associated with the first phone number.

In a possible implementation, the first electronic device may obtain the mobile traffic consumption information of the another SIM card from the specified server.

Electronic devices associated with the same phone number may separately access the specified server, and respectively send traffic statistics collection information of the device to the specified server. Correspondingly, the specified server may store the traffic statistics collection information of each electronic device. Therefore, each electronic device associated with the same phone number may obtain the traffic statistics collection information of another electronic device from the specified server.

The specified server may separately store the traffic statistics collection information of each electronic device, or may combine traffic statistics collection information of a plurality of electronic devices associated with the same phone number, to obtain, for example, traffic statistics collection information shown in Table 2, where the device 1 to the device 3 are associated with a same phone number.

**Table 2**

| Time period | Network port | Application identifier | Data volume of the device 1 | Data volume of the device 2 | Data volume of the device 3 |
|---|---|---|---|---|---|
| 2021. 07. 01 01:01 to 2021. 07. 01 02:00 | Port #1 | Application A | 2.3M | 12.3M | 22.3M |
| 2021.07.01 01:01 to 2021. 07. 01 02:00 | Port #1 | Application B | 4.6M | 44.6M | 34.6M |
| 2021. 07. 01 01:01 to 2021. 07.01 02:00 | Port #3 | Application C | 6.3M | 526.3M | 26.3M |
| 2021. 07. 01 01:01 to 2021. 07. 01 02:00 | Port #2 | Application C | 5.8M | 65.8M | 35.8M |
| 2021. 07. 01 02:01 to 2021. 07.01 03:00 | Port #1 | Application D | 20.1M | 220.1M | 120.1M |
| 2021. 07. 01 02:01 to 2021. 07.01 03:00 | Port #3 | Application E | 27.3M | 327.3M | 627.3M |
| 2021. 07. 01 02:01 to 2021. 07.01 03:00 | Port #2 | Application B | 29.3M | 829.3M | 729.3M |
| 2021. 07. 01 03:01 to 2021. 07. 01 04:00 | Port #2 | Application C | 22.3M | 922.3M | 522.3M |
| 2021. 07. 01 03:01 to 2021. 07. 01 04:00 | Port #3 | Application D | 21.3M | 321.3M | 721.3M |
| 2021. 07. 01 04:01 to 2021. 07. 01 05:00 | Port #2 | Application A | 62.3M | 562.3M | 962.3M |
| 2021. 07. 01 04:01 to 2021. 07. 01 05:00 | Port #1 | Application B | 82.3M | 382.3M | 482.3M |
| ... | ... | ... | ... | ... | ... |

In this case, the specified server may send the combined traffic statistics collection information shown in Table 2 to the corresponding device 1, device 2, and device 3.

It should be noted that, an update frequency of traffic information in an electronic device is relatively high. Therefore, each electronic device associated with a same phone number may periodically upload traffic statistics collection information to a specified server, and update traffic statistics collection information stored in the specified server; or may periodically download traffic statistics collection information of another electronic device from the specified server. Data upload period and data download period may be the same or different. Specific values of the foregoing periods are not limited in this embodiment of this application.

It should be noted that, the foregoing uses an example in which the electronic device sends the traffic statistics collection information to the specified server. The electronic device may alternatively send only the mobile traffic consumption information of the SIM card to the specified server. Correspondingly, each electronic device may obtain mobile traffic consumption information of the another electronic device from the specified server. For specific implementation, refer to the foregoing descriptions. Details are not described herein again.

In another possible implementation, the first electronic device may obtain the mobile traffic consumption information of the another SIM card from the another electronic device associated with the first phone number.

A direct connection may be established between the first electronic device and the second electronic device. The first electronic device and the second electronic device perform data exchange through the direct connection, determine that a SIM of a peer device is associated with the first phone number, and separately send mobile traffic consumption information of the SIM card of the device to the peer device, or separately send the traffic statistics collection information of the device to the peer device.

Optionally, if the first electronic device obtains the traffic statistics collection information of the another electronic device, the first electronic device may perform statistics collection and combined processing on the traffic statistics collection information of the device and the traffic statistics collection information of the another electronic device, to obtain a combined processing result, for example, shown in Table 2. Similarly, the first electronic device may further perform statistics collection and combined processing on mobile traffic consumption information of the plurality of SIM cards. For a specific method, refer to implementation of performing statistics collection and combined processing on traffic statistics collection information. Details are not described herein again.

During actual implementation, the first electronic device may support both the foregoing two possible implementations, so that the first electronic device may obtain the mobile traffic consumption information of the another SIM card in different scenarios.

Step 504: The first electronic device displays the traffic statistics collection information of the another electronic device.

For implementation of this step, refer to corresponding descriptions in FIG. 4A-1 and FIG. 4A-2.

When the first electronic device displays a mobile traffic consumption query interface, for example, shown in an interface 410, the first electronic device may obtain a list that is of SIM cards associated with the first phone number and that is stored in Step 501, and display the mobile traffic consumption query interface based on the SIM card list. The query interface displays description information of each SIM card recorded in the SIM card list, for example, "SIM card of the device 1" in the interface. The first electronic device may further dispose a corresponding "View" control for each SIM card.

When displaying the mobile traffic consumption information display interface of the SIM card, for example, shown in the interface 420, the first electronic device may obtain, based on a card identifier of the SIM card, the mobile traffic consumption information of the SIM card from information prestored in Step 502 and Step 503, obtain, through statistics collection, consumption information required for the display interface, for example, mobile traffic consumed by the SIM card in a current billing period and mobile traffic consumed each day in seven days, and display a corresponding statistical result in the mobile traffic consumption information display interface.

When displaying an interface, for example, shown in the interface 430, the first electronic device may further obtain, based on the mobile traffic consumption information of the SIM card and through statistics collection, mobile traffic consumed by each application in a specified time period (for example, a current billing period), and display the obtained statistical result in a display interface of mobile traffic consumption information of the application.

Optionally, the first electronic device may further display a traffic usage reminder to the user.

If mobile traffic consumed by the first phone number, mobile traffic consumed by a device based on the first phone number, or mobile traffic consumed based on the first phone number within a time period reaches a preset value, the user may be reminded in a manner such as a sound, vibration, or interface display, to prevent the user from overusing traffic.

According to the traffic statistics collection method shown in FIG. 5, that mobile traffic consumption information of another SIM card associated with a same phone number is viewed on one electronic device is implemented. Mobile traffic usage of a plurality of SIM cards associated with a same phone number can be viewed on one electronic device, thereby reducing user operations and improving user experience.

FIG. 8 is a flowchart of an embodiment of a traffic statistics collection method according to this application. In this embodiment, an example in which a SIM card of a mobile phone and an eSIM card of a smartwatch are associated with a first phone number is used. In this embodiment, data exchange is performed between the mobile phone and the smartwatch through a direct connection. As shown in FIG. 8, the method includes the following steps.

Step 801: The mobile phone establishes a connection to the smartwatch, and the mobile phone obtains a device identifier IMEI001 of the smartwatch and a card identifier IMSI001 of the eSIM in the smartwatch.

Step 802: A first application in the mobile phone detects an eSIM activation operation performed on the smartwatch by a user, obtains the card identifier IMSI001 of the eSIM card in the smartwatch, obtains the first phone number associated with the eSIM card in the smartwatch, and performs, based on the first phone number and the card identifier IMSI001 of the eSIM card in the smartwatch, an activation procedure corresponding to the eSIM activation operation. For the activation procedure, refer to the foregoing descriptions of the eSIM activation procedure. Details are not described herein again.

Step 803: The first application of the mobile phone sends a first notification message to a traffic management application, where the first notification message may include the first phone number, the device identifier IMEI001, and the card identifier IMSI001.

In this case, the traffic management application may store information, for example, shown in Table 3. IMEI002 is a device identifier of the mobile phone, and IMSI002 is a card identifier of the SIM card in the mobile phone.

**Table 3**

| Phone number | Device identifier | Card identifier |
|---|---|---|
| First phone number | IMEI001 | IMSI001 |
| First phone number | IMEI002 | IMSI002 |

Step 804: The traffic management application of the mobile phone stores a correspondence between the first phone number and the device identifier IMEI001 and the card identifier IMSI001.

Step 805: The traffic management application of the mobile phone sends a traffic information request message to the smartwatch based on the device identifier IMEI001, where traffic information request message may include the card identifier IMSI001. The traffic request message requests mobile traffic consumption information of the SIM card indicated by the card identifier IMSI001.

Step 806: A traffic management application of the smartwatch obtains the mobile traffic consumption information corresponding to the card identifier IMSI001, and sends obtained mobile traffic message information to the traffic management application of the mobile phone.

Step 807: The traffic management application of the mobile phone stores the mobile traffic consumption information corresponding to the card identifier IMSI001.

It should be noted that, Step 805 to Step 807 may be triggered, based on a preset traffic update period, to be performed, so that the mobile phone stores latest mobile traffic consumption information of the eSIM card in the smartwatch. A specific value of the traffic update period is not limited in this embodiment of this application.

Optionally, in Step 806, the traffic management application of the smartwatch may send traffic statistics collection information of the smartwatch to the mobile phone. The traffic management application of the mobile phone may store the traffic statistics collection information, or retrieve the mobile traffic consumption information based on the card identifier IMSI001 and store the mobile traffic consumption information.

Step 808: The traffic management application of the mobile phone displays a mobile traffic consumption query interface based on a detected user operation, where a "View" control corresponding to the SIM card of the mobile phone and a "View" control corresponding to the eSIM card of the smartwatch may be displayed in the interface.

For implementation of the mobile traffic consumption query interface, refer to an interface 410 in FIG. 4A-1. Details are not described herein again.

It should be noted that, in the mobile traffic consumption query interface, a "View" control corresponding to the SIM card of the mobile phone may correspond to the card identifier IMSI002 of the SIM card of the mobile phone, and the "View" control corresponding to the eSIM card of the smartwatch may correspond to the card identifier IMSI001 of the eSIM card of the smartwatch.

Step 809: The traffic management application of the mobile phone detects a selection operation performed on the "View" control of the eSIM card, obtains the mobile traffic consumption information corresponding to the card identifier IMSI001, and displays the mobile traffic display interface based on the mobile traffic consumption information.

For implementation of the mobile traffic display interface, refer to an interface 420 in FIG. 4A-1. Details are not described herein again.

Step 810: The traffic management application of the mobile phone detects a view operation performed on an application in the smartwatch, and generates a display interface of mobile traffic consumption information of the application based on the mobile traffic consumption information corresponding to the card identifier IMSI001, where the display interface displays mobile traffic consumption information of each application in the smartwatch, for example, mobile traffic consumed by each application in a current billing period.

For implementation of the display interface of the mobile traffic consumption information of the application, refer to an interface 430 in FIG. 4A-2. Details are not described herein again.

In the method shown in FIG. 8, the example in which the mobile phone and the smartwatch exchange data through the direct connection is used. In another embodiment provided in this application, the mobile phone and the smartwatch may perform data exchange, which is described in FIG. 8, through an indirect connection. A difference between this embodiment and the embodiment shown in FIG. 8 mainly lies in a difference of a connection used for data exchange. Specific implementation of this embodiment is not described herein again.

FIG. 9 is a block diagram of a software structure of an electronic device according to an embodiment of this application. In a layered architecture, software is divided into several layers, and each layer has a clear role and task. The layers communicate with each other through a software interface. In some embodiments, an Android system is divided into four layers: an application layer, an application framework layer, Android runtime (Android runtime) and a system library, and a kernel layer from top to bottom.

The application (Application, App) layer may include a series of application packages. The application package may include the foregoing first application, the traffic management application, and the like. In addition, the application layer may be further divided into three modules: an interface, logic, and data. The modules communicate with each other through a software interface. The interface module is configured to display information for user interaction; the logic module is configured to process information; and the data module is configured to store data.

Specifically, as shown in FIG. 9, the interface module includes:
the UI module, configured to display an interface described in the foregoing embodiment, for example, the foregoing mobile traffic consumption query interface, a display interface of mobile traffic of a SIM card, or a display interface of mobile traffic of an application in a device.

The logic module includes:
a one-number-multi-terminal information management module, configured to store information such as a list of SIM cards associated with a phone number;
a multi-terminal traffic information management module, configured to store mobile traffic consumption information of SIM cards associated with a first phone number, where the SIM cards associated with the first phone number may include: a SIM card that is associated with the first phone number and that is in the device, and a SIM card that is associated with the first phone number and that is in another electronic device different from the device; and
a local traffic statistics collection module, configured to: collect statistics on traffic usage of the device and record traffic statistics collection information.

The UI module, the one-number-multi-terminal information management module, the multi-terminal traffic information management module, and the local traffic statistics collection module may be modules in an application, for example, in the traffic management application.

The framework (Framework, FWK) layer provides an application programming interface (application programming interface, API) and a programming framework for the application at the application layer. The application framework layer includes some predefined functions, for example, a communication protocol framework shown in FIG. 9.

The system library may include a plurality of functional modules, for example, a data transmission module shown in FIG. 9.

The kernel layer is a layer between hardware and software. The kernel layer may include a communication driver and the like.

In a possible implementation, for example, a schematic diagram of data exchange between two electronic devices is shown in FIG. 10. One-number-multi-terminal information management modules of an electronic device 1 and an electronic device 2 synchronize, through a direct connection, card identifiers of SIM cards associated with a same phone number. Multi-terminal traffic information management modules of the electronic device 1 and the electronic device 2 may synchronize, through the direct connection, mobile traffic consumption information of the SIM cards associated with the same phone number.

In another possible implementation, for example, a schematic diagram of data exchange between two electronic devices is shown in FIG. 11. The one-number-multi-terminal information management modules of an electronic device 1 and an electronic device 2 are indirectly connected by using an information transfer device, and synchronize the card identifiers of the SIM cards associated with the same phone number. The multi-terminal traffic information management modules of the electronic device 1 and the electronic device 2 are indirectly connected by using the information forwarding device, and synchronize the mobile traffic consumption information of the SIM cards associated with the same phone number.

It should be noted that, in embodiments of this application shown in FIG. 1 to FIG. 9, an example in which a SIM card is disposed in an electronic device is used. The SIM card may be a conventional card type SIM card, or may be an eSIM card. This is not limited in embodiments of this application.

This application further provides an electronic device. The device includes a storage medium and a central processing unit. The storage medium may be a non-volatile storage medium, and the storage medium stores a computer executable program. The central processing unit is connected to the non-volatile storage medium, and executes the computer executable program to implement the methods provided in embodiments shown in FIG. 1 to FIG. 8 in this application.

Embodiments of this application further provide a computer-readable storage medium. The computer-readable storage medium stores a computer program. When the computer program is run on a computer, the computer is enabled to perform the methods provided in embodiments shown in FIG. 1 to FIG. 8 in this application.

Embodiments of this application further provide a computer program product. The computer program product includes a computer program. When the computer program is run on a computer, the computer is enabled to perform the methods provided in embodiments shown in FIG. 1 to FIG. 8 in this application.

In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exist. A and B may be singular or plural. A character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, and c may indicate a, b, c, a and b, a and c, b and c, or a, b, and c, where a, b, and c may be singular or plural.

A person of ordinary skill in the art may be aware that, units and algorithm steps described in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A traffic statistics collection method, applied to a first electronic device, wherein a first SIM card is disposed in the first electronic device, the first SIM card is associated with a first phone number, and the method comprises:
displaying a first interface, wherein a first control is displayed in the first interface, the first control corresponds to a second SIM card associated with the first phone number, and the second SIM card is disposed in a second electronic device; and
detecting a selection operation performed on the first control, and displaying a second interface, wherein mobile traffic information corresponding to the second SIM card is displayed in the second interface.

2. The method according to claim 1, further comprising:
displaying a second control in the second interface; and
detecting a selection operation performed on the second control, and displaying a third interface, wherein mobile traffic information of each application in the second electronic device is displayed in the third interface, and mobile traffic information corresponding to the application is used to record mobile traffic consumed by the application by using the second SIM card.

3. The method according to claim 1, further comprising:
displaying, in the second interface, mobile traffic information of each application in the second electronic device, wherein the mobile traffic information of the application is used to record mobile traffic consumed by the application by using the second SIM card.

4. The method according to any one of claims 1 to 3, wherein before the displaying a first interface, the method further comprises:
obtaining a card identifier of the second SIM card; and
the displaying a first interface comprises:
displaying the first interface based on the card identifier of the second SIM card, wherein the first control corresponds to the card identifier of the second SIM card.

5. The method according to any one of claims 1 to 3, wherein before the displaying a second interface, the method further comprises:
obtaining the mobile traffic information corresponding to the second SIM card; and
the displaying a second interface comprises:
displaying the second interface based on the mobile traffic information corresponding to the second SIM card.

6. The method according to claim 4, wherein the obtaining a card identifier of the second SIM card comprises:
obtaining the card identifier of the second SIM card from a first server, wherein the card identifier of the second SIM card is transmitted by the second electronic device to the first server;
obtaining the card identifier of the second SIM card from the second electronic device;
obtaining the card identifier of the second SIM card from a first application, wherein the first application is an application for activating a service that associates the second SIM card with the first phone number; or
obtaining, from a target interface, information entered by the user, to obtain the card identifier of the second SIM card.

7. The method according to claim 5, wherein the obtaining the mobile traffic information corresponding to the second SIM card comprises:
obtaining, from a first server, the mobile traffic information corresponding to the second SIM card, wherein the mobile traffic information corresponding to the second SIM card is transmitted by the second electronic device to the first server; or
obtaining, from the second electronic device, the mobile traffic information corresponding to the second SIM card.

8. The method according to any one of claims 1 to 7, further comprising:
displaying a third control in the first interface, wherein the third control corresponds to a third SIM card associated with the first phone number, and the third SIM card is disposed in a third electronic device; and
detecting a selection operation performed on the third control, and displaying the third interface, wherein mobile traffic information corresponding to the third SIM card is displayed in the third interface.

9. The method according to any one of claims 1 to 8, wherein the second SIM card is an eSIM card.

10. An electronic device, comprising:
one or more processors, a memory, and one or more computer programs, wherein the one or more computer programs are stored in the memory, the one or more computer programs comprise instructions, and when the instructions are executed by the device, the device is enabled to perform the method according to any one of claims 1 to 9.

11. A computer-readable storage medium, wherein the computer-readable storage medium stores a computer program, and when the computer program is run on a computer, the computer is enabled to perform the method according to any one of claims 1 to 9.
